# EUROPEAN PATENT APPLICATION

(11) **EP 3 454 193 A1**
(43) Date of publication of application: **13.03.2019**
(21) Application number: 18193708.7
(22) Date of filing: 11.09.2018
(51) Int. Cl.: G06F 3/0482, G06F 3/0486, G06F 21/32, G06K 9/00

(54) **CONTROL METHOD AND APPARATUS OF TERMINAL DEVICE, AND STORAGE MEDIUM**

(30) Priority: 11.09.2017 CN 201710812928
(71) Applicant: Guangdong OPPO Mobile Telecommunications Corp., Ltd., Dongguan, Guangdong 523860 (CN)
(72) Inventor: LI, Hong, Dongguan, Guangdong 523860 (CN)
(74) Representative: Manitz Finsterwald Patentanwälte PartmbB

(57) **Abstract**

The present disclosure provides a control method and a control apparatus of a terminal device, and a storage medium. The method includes: detecting (101, 201) a touch operation on a virtual button bar; when the touch operation on the virtual button bar is detected, determining (102, 202) whether the touch operation is a target sliding operation; when the touch operation is the target sliding operation, displaying (103) a shortcut function bar in a current display interface of the terminal device, the shortcut function bar including the virtual button bar and a preset function bar.

## Description

### FIELD

The present disclosure relates to an electronic technology field, and more particularly to a control method and a control apparatus of a terminal device, and a storage medium.

### BACKGROUND

With the popularization of terminal devices (such as cell phones, tablet computers, and laptop computers), various applications in the terminal devices provide great convenience for users' life. The terminal devices of the users are generally installed with a great number of applications, and in order to facilitate the users to find or use these applications, the terminal devices typically have a function of displaying various applications quickly.

In the related art, after a screen of the terminal device is light, a sliding instruction for sliding from an edge of the screen of the terminal device towards the inside of the screen is received from the user. Based on the sliding instruction, the terminal device may display a preset function bar including icons of a plurality of applications in the screen, and the user may directly perform operation on the icon of the application in the preset function bar.

However, a virtual button is set on the edge of the screen of the terminal device, and the user's finger may touch the virtual button mistakenly when sliding from the edge of the screen towards the inside of the screen., i.e., the sliding instruction with respect to the preset function bar affects normal usage of the virtual button.

### DISCLOSURE

Embodiments of the present disclosure provide a control method of a terminal device, a terminal device, and a storage medium.

According to a first aspect of the present disclosure, a control method of a terminal device is provided. The method includes: detecting a touch operation on a virtual button bar; when the touch operation on the virtual button bar is detected, determining whether the touch operation is a target sliding operation; when the touch operation is the target sliding operation, displaying a shortcut function bar in a current display interface of the terminal device, the shortcut function bar including the virtual button bar and a preset function bar, the preset function bar displaying at least one identification, the identification being an icon of any application or an entry of any function of the terminal device.

In an embodiment, the target sliding operation is an operation sliding along a target direction, when the touch operation is the target sliding operation. Displaying the shortcut function bar in the current display interface of the terminal device comprises: when the touch operation is the target sliding operation, causing the virtual button bar to slide from a starting position along the target direction in the current display interface of the terminal device; and when the virtual button bar reaches a target position, displaying the preset function bar in the current display interface.

In an embodiment, the starting position is at an edge of the current display interface. A distance between the starting position and the target position is between 1/3 and 2/3 of a length in the target direction of the current display interface.

In an embodiment, causing the virtual button bar to slide from the starting position along the target direction in the current display interface of the terminal device comprises: causing the virtual button bar to slide from the starting position along the target direction in the current display interface of the terminal device, and causing the preset function bar to emerge from the edge of the current display interface with the sliding of the virtual button bar.

In an embodiment, when the touch operation is the target sliding operation, displaying the shortcut function bar in the current display interface of the terminal device comprises: when the touch operation is the target sliding operation, performing fingerprint recognition for a user; when the user passes the fingerprint recognition, displaying the virtual button bar and a first function bar of the preset function bar in the current display interface of the terminal device; and when the user does not pass the fingerprint recognition, displaying the virtual button bar and a second function bar of the present function bar in the current display interface of the terminal device.

In an embodiment, the method further comprises: receiving a control instruction for any identification in the preset function bar; when the identification corresponding to the control instruction is the icon of any application in the terminal device, controlling the terminal device to launch the application; and when the identification corresponding to the control instruction is the entry of any function of the terminal device, executing the function corresponding to the entry.

In an embodiment, the method further comprises: when the touch operation on the virtual button bar is detected, determining whether the touch operation is a clicking operation on any virtual button in the virtual button bar; and when the touch operation is the clicking operation, controlling the terminal device according to a function corresponding to the virtual button.

In an embodiment, determining whether the touch operation is the clicking operation on any virtual button in the virtual button bar comprises: when a duration of a pressing operation in an area including the virtual button exceeds a preset time period, determining that the pressing operation is the clicking operation on the virtual button; or when a pressure of a pressing operation in an area including the virtual button exceeds a preset pressure, determining that the pressing operation is the clicking operation on the virtual button.

According to a second aspect of the present disclosure, a control apparatus of a terminal device is provided. The apparatus includes: a detecting module, a first determining module and a first display module. The detecting module is configured to detect a touch operation on a virtual button bar. The first determining module is configured to determine whether the touch operation is a target sliding operation when the touch operation on the virtual button bar is detected. The first display module is configured to display a shortcut function bar in a current display interface of the terminal device when the touch operation is the target sliding operation. The shortcut function bar includes the virtual button bar and a preset function bar. The preset function bar displays at least one identification. The identification is an icon of any application or an entry of any function of the terminal device.

In an embodiment, the target sliding operation is an operation sliding along a target direction. The first display module includes: a sliding sub-module, configured to, when the touch operation is the target sliding operation, cause the virtual button bar to slide from a starting position along the target direction in the current display interface of the terminal device; and a second display sub-module, configured to, when the virtual button bar reaches a target position, display the preset function bar in the current display interface.

In an embodiment, the starting position is at an edge of the current display interface. A distance between the starting position and the target position is between 1/3 and 2/3 of a length in the target direction of the current display interface.

In an embodiment, the sliding sub-module is configured to: cause the virtual button bar to slide from the starting position along the target direction in the current display interface of the terminal device, and cause the preset function bar to emerge from the edge of the current display interface with the sliding of the virtual button bar.

In an embodiment, the control apparatus of the terminal device further includes: a receiving module, configured to receive a control instruction for any identification in the preset function bar; a first control module, configured to, when the identification corresponding to the control instruction is the icon of any application in the terminal device, control the terminal device to launch the application; and an executing module, configured to, when the identification corresponding to the control instruction is the entry of any function of the terminal device, execute the function corresponding to the entry.

In an embodiment, the control apparatus of the terminal device further includes: a second determining module, configured to, when the touch operation on the virtual button bar is detected, determine whether the touch operation is a clicking operation on any virtual button in the virtual button bar; and a second control module, configured to, when the touch operation is the clicking operation, control the terminal device according to a function corresponding to the virtual button.

According to a third aspect of the present disclosure, a storage medium is provided. When instructions stored in the storage medium is executed by a processor of a terminal device, the terminal device is caused to perform a control method of the terminal device according to the first aspect of the present disclosure.

### BRIEF DESCRIPTION OF THE DRAWINGS

In order to explain technical solutions in embodiments of the present disclosure or in the related art clearly, drawings required to be used in the description of embodiment or the related art will be illustrated briefly in the following. Obviously, the drawings in the following description are merely some embodiments of the present disclosure, and those skilled in the art can obtain other drawings based on these drawings without creative labor.
Fig. 1 is a flow chart of a control method of a terminal device according to embodiments of the present disclosure.
Fig. 2A is a flow chart of a control method of a terminal device according to another embodiment of the present disclosure.
Fig. 2B is a schematic diagram of a virtual button bar in a display interface according to an embodiment of the present disclosure.
Fig. 2C is a schematic diagram of a sliding operation performed by a user in a display interface which slide upwards from a starting position according to an embodiment of the present disclosure.
Fig. 2D is a schematic diagram illustrating sliding to a certain point in a display interface according to an embodiment of the present disclosure.
Fig. 2E is a schematic diagram illustrating a sliding of a virtual button bar along a target direction according to an embodiment of the present disclosure.
Fig. 2F is a schematic diagram of a display interface according to an embodiment of the present disclosure.
Fig. 2G is a schematic diagram of a display interface according to another embodiment of the present disclosure.
Fig. 3A is a block diagram of a control apparatus of a terminal device according to an embodiment of the present disclosure.
Fig. 3B is a block diagram of a first display module according to an embodiment of the present disclosure.
Fig. 3C is a block diagram of a control apparatus of a terminal device according to another embodiment of the present disclosure.
Fig. 3D is a block diagram of a control apparatus of a terminal device according to another embodiment of the present disclosure.
Fig. 4 is a block diagram of a terminal device according to an embodiment of the present disclosure.
Fig. 5 is a block diagram of a terminal device according to another embodiment of the present disclosure.
Fig. 6A is a schematic diagram of a full-screen terminal device according to an embodiment of the present disclosure.
Fig. 6B is a schematic diagram of a curved-screen terminal device according to an embodiment of the present disclosure.
Fig. 6C is a schematic diagram of an anomalous-screen terminal device according to an embodiment of the present disclosure.
Fig. 6D is a schematic diagram of an anomalous-screen terminal device according to another embodiment of the present disclosure.
Fig. 6E is a schematic diagram of an anomalous-screen terminal device according to another embodiment of the present disclosure.
Fig. 6F is a schematic diagram of an anomalous-screen terminal device according to another embodiment of the present disclosure.

With above drawings, specific embodiments of the present disclosure have been illustrated, which will be described in detail hereinafter. These drawings and text description do not intend to limit the scope of the present disclosure in any way, but intend to explain the conception of the present disclosure to those skilled in the art with reference to specific embodiments.

### EMBODIMENTS OF THE PRESENT DISCLOSURE

The present disclosure provides a control method of a terminal device, a control apparatus of a terminal device and a storage medium, which may solve the problem of abnormal usage of the virtual button caused by touching the virtual button mistakenly when the user's finger slides from the edge of the screen towards the inside of the screen.

In order to illustrate objectives, technical solutions and advantages of the present disclosure clearer, implementation of the present disclosure will be described in detail below with reference to drawings. In addition, the terminal device involved in respective embodiments of the present disclosure may include an electronic device with a touch screen, such as a cell phone, a tablet computer, a laptop computer, an e-book, and a wearable device, in which the touch screen may be a full screen or a non-full screen.

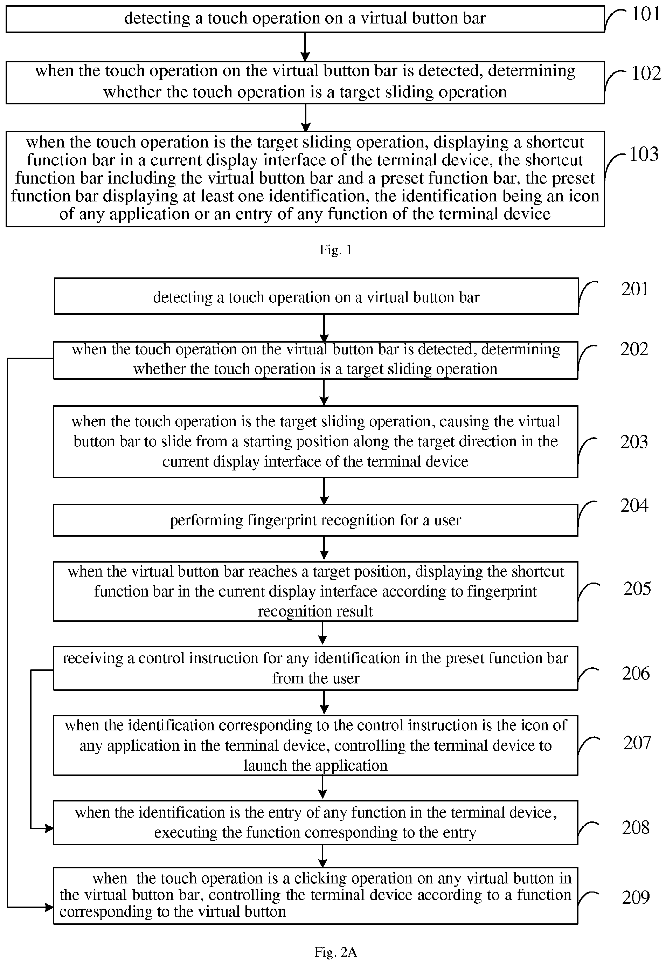

Fig. 1 is a flow chart of a control method of a terminal device according to an embodiment of the present disclosure. The method may include following operations.

At block 101, a touch operation on a virtual button bar is detected.

At block 102, when the touch operation on the virtual button bar is detected, it is determined whether the touch operation is a target sliding operation.

At block 103, when the touch operation is the target sliding operation, a shortcut function bar is displayed in a current display interface of the terminal device. The shortcut function bar includes the virtual button bar and a preset function bar. The preset function bar displays at least one identification, in which the identification is an icon of any application in the terminal device or an entry of any function of the terminal device.

In conclusion, with the control method of the terminal device according to this embodiment of the present disclosure, by enabling the touch instruction with respect to the virtual button bar to have the sliding instruction, and by displaying the shortcut function bar including the preset function bar and the virtual button bar when the touch instruction generated by the touch operation on the virtual button bar is the sliding instruction, it solves the problem in the related art that, the user's finger may touch the virtual button mistakenly when sliding from the edge of the screen towards the inside of the screen, i.e., the sliding instruction with respect to the preset function bar affects normal usage of the virtual button, which achieves the effect of avoiding affecting the normal usage of the virtual button by the sliding instruction with respect to the preset function bar.

Further, as illustrated in Fig. 2A, which is a flow chart of a control method of a terminal device according to another embodiment of the present disclosure, the method includes following operations.

At block 201, the touch operation on the virtual button bar is detected.

After a screen of the terminal device is lighten, the virtual button bar may be displayed in the display interface of the terminal device, and a control component of the terminal device may detect the touch operation on the virtual button bar continuously or with a preset frequency.

The virtual button bar may be an area where the virtual button is in the display interface of the terminal device, in which the area may be located anywhere in the display interface. In some embodiments, in order to make it convenient for the user to operate, the area may be located on the edge of the display interface of the terminal device. It is to be noted that, the touch operation of the user may be received at any area in the virtual button bar.

In addition, the virtual button in the virtual button bar is an icon set in the display interface, which may achieve same function as a physical button. For example, the common virtual button includes a back button, a home button (back-to-desktop button) and a function list button. The user may click on the virtual button to achieve its function.

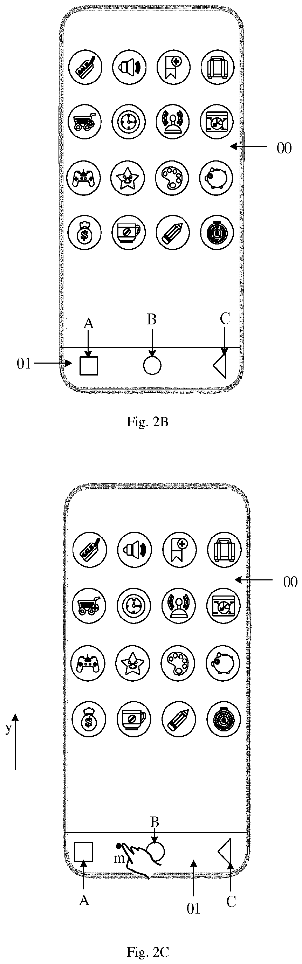

For example, as illustrated in Fig. 2B, the virtual button bar 01 includes virtual buttons A, B and C, and the virtual button bar 01 may be located on the lower edge of the display interface 00. The user may perform the touch operation at any position in the virtual button bar 01. Fig. 2B illustrates a case in which the display interface 00 displays a main interface with icons. The virtual button bar may be displayed in other display interfaces (such as an interface of a certain application), which is not limited in embodiments of the present disclosure.

It is to be noted that, in embodiments of the present disclosure, the control component of the terminal device may treat the touch operation received in a preset area as the touch operation of the user on the virtual button bar. The preset area may overlap with the virtual button bar, or may be greater than the virtual button bra, which is not limited in embodiments of the present disclosure.

In addition, the control component involved in embodiments of the present disclosure may be a single processor, or may be a set of processors.

At block 202, when the touch operation on the virtual button bar is detected, it is determined whether the touch operation is a target sliding operation.

When the control component of the terminal device detects the touch operation on the virtual button bar, it may determine whether the touch operation is the target sliding operation.

In embodiments of the present disclosure, the control component of the terminal device may treat the touch operation as the target sliding operation when the touch operation received by the virtual button bar satisfies a preset condition. For example, the preset condition may be that, the touch operation is a sliding operation and an angle between a direction of the sliding operation and a target direction (which may be a direction in parallel to one edge of the display interface of the terminal device) is less than a preset angle (for example, 45 degree). In addition, with regard to the preset condition, reference can be made to related art, which will not be elaborated here.

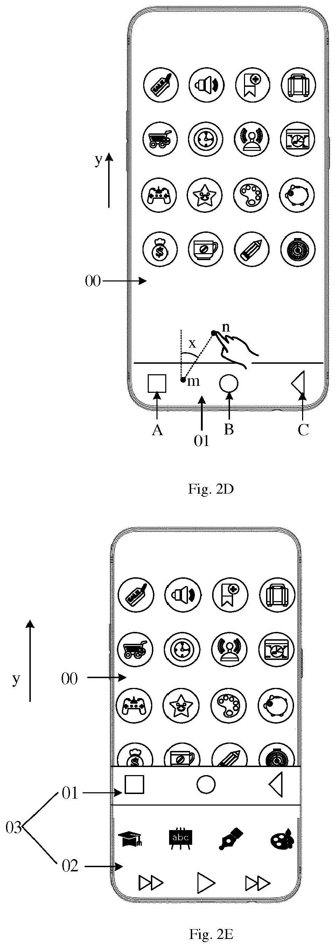

For example, as illustrated in Figs. 2C and 2D, the virtual button bar is located on the lower edge of the display interface 00, and the virtual button bar 01 includes three virtual buttons A, B and C. Fig. 2C is a schematic diagram illustrating the sliding operation performed by the user in the display interface 00, which slide upwards from a beginning point m. Fig. 2D is a schematic diagram illustrating sliding to a certain point n in the display interface 00. When an angle x between the line nm and a preset direction y is less than or equal to the preset angle, the control component of the terminal device may treat the sliding operation performed by the user as the target sliding operation.

In actual practice, the target sliding operation performed by the user on the touch screen may be in the upward direction, in the downward direction, in the leftward direction or in the rightward direction. In detail, when the virtual button bar is located in the lower edge area of the terminal device, the target sliding operation may be the upward sliding operation; when the virtual button bar is located in the upper edge area of the terminal device, the target sliding operation may be the downward sliding operation; when the virtual button bar is located in the left edge area of the terminal device, the target sliding operation may be the rightward sliding operation; when the virtual button bar is located in the right edge area of the terminal device, the target sliding operation may be the leftward sliding operation. When the control component determines that the touch operation performed by the user on the virtual button bar is the target sliding operation according to the preset condition, the control component controls the virtual button bar of the terminal device to slide in the corresponding direction.

At block 203, when the touch operation is the target sliding operation, the virtual button bar is caused to slide from the starting position along the target direction in the current display interface of the terminal device.

The control component of the terminal device may control the virtual button bar to slide from the starting position along the target direction in the current display interface of the terminal device when the touch operation received by the virtual button bar is the target sliding operation. In some embodiments, this operation may be performed as follows. The virtual button bar is caused to slide from the starting position along the target direction in the current display interface of the terminal device, and the preset function bar is caused to emerge from the edge of the current display interface with the sliding of the virtual button bar.

While the virtual button bar is sliding from the starting position along the target direction in the current display interface of the terminal device, the preset function bar emerges from the edge at the same time. For example, as illustrated in Fig. 2E, which is a schematic diagram illustrating the virtual button bar 01 sliding in the target direction y, the preset function bar emerges from the edge of the display interface with the sliding of the virtual button bar 01. As a result, it may produce a visual effect in which the shortcut function bar 03 including the virtual button bar 01 and the preset function bar 02 slides into the display interface from the lower edge. The preset function bar may emerge from the edge in a way of gradual change or in a way of rotation, which is not limited in embodiments of the present disclosure. In addition, the preset function bar may emerge from other edges (different from the edge where the virtual button bar is), which is not limited in embodiments of the present disclosure.

At block 204, fingerprint recognition is performed for the user.

During the sliding operation of the user, the control component of the terminal device may start the fingerprint recognition sensor to obtain fingerprint information of the user and recognize the fingerprint information. During the fingerprint recognition, the control component of the terminal device may compare the fingerprint information currently obtained with the fingerprint information pre-stored in the fingerprint database, may determine that the user passes the fingerprint recognition when the pre-stored fingerprint database has the fingerprint information matching the currently obtained fingerprint information, and may determine that the user does not pass the fingerprint recognition when the pre-stored fingerprint database does not have the fingerprint information matching the currently obtained fingerprint information. In addition, with regard to the fingerprint collection and fingerprint recognition, reference can be made to technologies in the related art, which will not be elaborated here.

In some embodiments, the fingerprint recognition sensor may be integrated in a whole area or a partial area (which may be located in an area where the virtual button bar is) of the screen.

It is to be noted that, the user who can pass the fingerprint recognition can be referred to as a target user. Before performing the operation at 204, the terminal device may collect the fingerprint information of the target user in advance and establish the fingerprint database. The fingerprint database may include both the identification of the target user and the fingerprint information of the target user, or may include only the fingerprint information of the target user. In addition, there may be a plurality of fingerprint information of the target user.

For example, one kind of fingerprint database may be as illustrated in Table 1.

**Table 1**

| Fingerprint information |
|---|
| a1, a2, a3 |
| b1, b2, b3 |

Table 1 records a plurality of fingerprint information a1, a2, a3, b1, b2 and b3. When the currently obtain fingerprint information matches any of these fingerprint information, the control component of the terminal device may determine that the current user is the target user.

Another kind of fingerprint database may be as illustrated in Table 2.

**Table 2**

| identification of target user | fingerprint information |
|---|---|
| A | a1, a2, a3 |
| B | b1, b2, b3 |

In Table 2, the left column records identifications of the target users, the right column records the fingerprint information corresponding to the identifications of the target users, and the data in the same line has a correspondence relationship. For example, the fingerprint information corresponding to the identification A includes a1, a2 and a3, and the fingerprint information corresponding to the identification B includes b1, b2 and b3. When the fingerprint database is as illustrated in Table 2, the terminal device not only can determine whether the user is the target user who can pass the fingerprint recognition, but also can distinguish different target users, such that it is possible to perform different control according to different target users.

At block 205, when the virtual button bar slides to a target position, the shortcut function bar is displayed in the current display interface according to the fingerprint recognition result.

When the virtual button bar slides to the target position, the control component of the terminal device may control the current display interface to display in different ways according to the fingerprint recognition result at 204. The display ways may include followings according to the fingerprint recognition result.

The first display way: when the user passes the fingerprint recognition, the shortcut function bar including the virtual button bar and a first function bar is displayed in the current display interface of the terminal device.

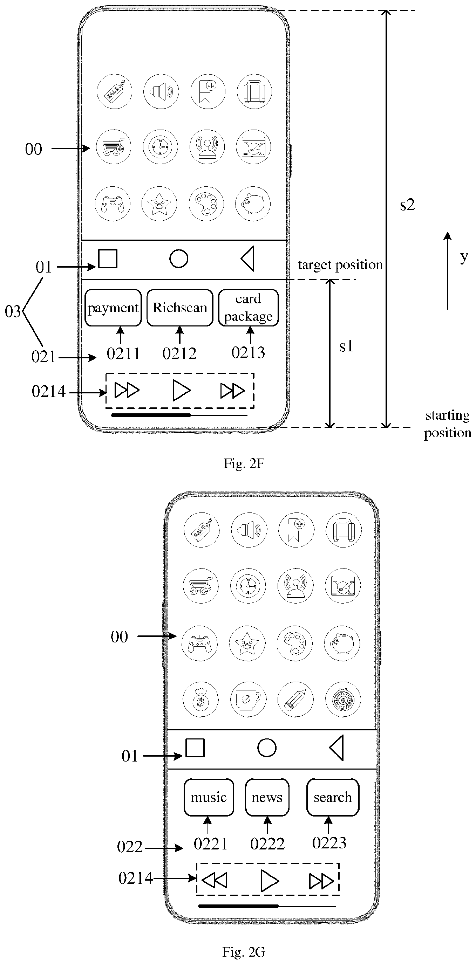

The identifications displayed in the first function bar may include icons of a part of applications installed in the terminal device and entries of a part of functions in the terminal device. The user may set the identifications in the first function bar according to his own usage habits. In this case, since the user is the target user passing the fingerprint recognition, the first function bar may include icons of applications and entries of functions which require safety or privacy. For example, as illustrated in Fig. 2F, the shortcut function bar in the current display interface 00 may include the virtual button bar 01 and the first function bar 021, and the identifications in the first function bar 02 include the icon 0211 of the payment software, the entry 0212 of a Richscan function and the icon 0213 of a virtual card package. In addition, the control component of the terminal device may display different first function bars in the current display interface according to different target users.

The second display way: when the user does not pass the fingerprint recognition, the shortcut function bar including the virtual button bar and a second function bar is displayed in the current display interface of the terminal device.

The second function bar also displays icons of applications installed in the terminal device or entries of functions in the terminal. Since the user does not pass the fingerprint recognition, the user may not be the target user authorized by the owner of the terminal device that can use all the functions of the terminal device, and thus the second function bar may include icons and entries of some applications and functions which do not require safety and privacy. For example, as illustrated in Fig. 2G, the identifications in the second function bar 022 of the current display interface 00 include the icon 0221 of the music player application, the icon 0222 of the news application, and the entry 0223 of the search function.

By displaying the first function bar or the second function bar in these two ways, it is possible to make it convenient for the user to use the applications quickly, and moreover, it is possible to improve the safety performance of the terminal device.

In embodiments of the present disclosure, the identifications displayed in the preset function bar of the shortcut function bar may include icons of applications installed in the terminal device and entries of functions in the terminal device. The applications installed in the terminal device may refer to system applications (for example, built-in applications such as calling, desktop and messages), or third-party applications (for example, social applications provided by third-parties). The entry of the function may refer to a shortcut for starting a certain function (such as Richscan) in the terminal device. The user may control the terminal device to start the function by clicking the shortcut.

As illustrated in Figs. 2F and 2G, both the first function bar 021 and the second function bar 022 can display two types of identifications, i.e., icons of applications (for example, 0211 and 0213) and entries of functions (for example, 0212 and 0214). The icon of the application may be configured to unload, edit or start the application corresponding to the icon, and the entry of the function may be configured to execute various functions provided by the application, for example, the code scanning function in the Richscan function, and play, fast forward and fast backward in the music player function.

In addition, in order to avoid the virtual button bar to be too far away from the edge of the display interface, the distance between the target position and the starting position may be between 1/3 and 2/3 of a length in the target direction of the current display interface. As such, it is convenient for the user to use the virtual button in the virtual button bar when the virtual button bar slides to the target position. For example, as illustrated in Fig. 2F, the distance between the starting position and the target position is s1, the length of the current display interface 00 in the direction y is s2, and s1 is between 1/3 and 2/3 of s2.

It is to be noted that, when the virtual button bar slides to the target position, the display interface of the terminal device is same as that before the user slides the virtual button bar. However, with the sliding the virtual button bar, the display interface may be displayed in two different ways. In one way, after the current display interface displays the virtual button bar and the first function bar, the content originally located in an area where the virtual button bar and the first function bar is may be concealed by the virtual button bar and the first function bar. For example, as illustrated in Fig. 2F, as the shortcut function bar 03 is displayed in the current display interface 00, the last line of icons in the four lines of icons originally displayed in the display interface 00 are concealed by the virtual button bar 01 and the first function bar 021. In the other way, after the current display interface displays the virtual button bar and the first function bar, content in the current display interface would move according to the movement direction and movement distance of the virtual button bar. For example, as illustrated in Fig. 2G, the image displayed in the display interface 00 moves the corresponding distance upwards with the upward sliding operation of the virtual button bar, such that the display interface 00 still displays four lines of icons. With regard to meaning of other reference numbers in Figs. 2F and 2G, reference can be made to description of Fig. 2E, which will not be elaborated here.

It is to be noted that, operation at 204 is optional. The control component of the terminal device may not perform the fingerprint recognition. In this case, when the virtual button bar slides to the target position, a kind of preset function bar may be always displayed.

At block 206, a control instruction for any identification in the preset function bar is received from the user.

After the display screen displays the shortcut function bar (the preset function bar in the shortcut function bar may be the first function bar or the second function bar), the user may perform touch operation on any identification in the preset function bar, and the control component of the terminal device may execute operation at block 207 or operation at block 208 according to the type of identification (which may be the icon of the application or the entry of the function) on which the touch operation is performed.

At block 207, when the identification is the icon of any application in the terminal device, the terminal device is controlled to launch the application.

When the identification is the icon of any application installed in the terminal device, it indicates that the user may wish to launch the application corresponding to the icon, and in this case, the control component of the terminal device may control the terminal device to launch the application.

In addition, when the control instruction with respect to the icon of the application is long-press control instruction, the control component of the terminal device may cause the icon to enter into an editing mode, in which mode, the user may move the icon or may perform other operations such as unloading on the application corresponding to the icon.

At block 208, when the identification is the entry of any function of the terminal device, the function corresponding to the entry is executed.

When the control component of the terminal device executes the function corresponding to the entry, the current display interface may still be displayed, or the interface of the function corresponding to the entry may be displayed.

At block 209, when the touch operation is a clicking operation on any virtual button in the virtual button bar, the terminal device is controlled according to the function of the virtual button.

When the user performs the clicking operation on any virtual button, the control component of the terminal device generates a clicking instruction based on the clicking operation. The control component of the terminal device may determine whether the touch operation of the user is the clicking operation on any virtual button according to methods in the related art. For example, when the duration of the user's pressing in the area where the virtual button is exceeds a preset time period, or when the pressure of the user's pressing in the area where the virtual button is exceeds a preset pressure, the control component of the terminal device may determine that the pressing operation is the clicking operation on the virtual button.

After obtaining the clicking instruction on any virtual button in the virtual button bar, the control component of the terminal device may control the terminal device according to the function of the virtual button, for example, enter the main interface or return to the previous interface.

At present, since the frame of the terminal with full screen is relatively narrower, the beginning point of the sliding operation is generally in the virtual button bar when the user calls out the preset function bar through the sliding operation (when the terminal device with full screen is provided with an exterior housing, it is more difficult for the user to begin the sliding operation from the edge of the screen), and with the control method in the related art, this sliding operation may trigger the clicking instruction on the virtual button bar, which results in mistaken touch. In contrast, with the control method provided by embodiments of the present disclosure, the virtual button bar integrates two functions, i.e., sliding and clicking, and thus when the user begins the sliding operation from the virtual button bar, the control component of the terminal device may control according to operations from block 203 to 208, which reduces the possibility of the mistaken touch.

In conclusion, with the control method of the terminal device provided by embodiments of the present disclosure, by enabling the touch instruction with respect to the virtual button bar to have the sliding instruction, and by displaying the shortcut function bar including the preset function bar and the virtual button bar when the touch instruction generated by the touch operation on the virtual button bar is the sliding instruction, it solves the problem in the related art that, the user's finger may touch the virtual button mistakenly when sliding from the edge of the screen towards the inside of the screen, i.e., the sliding instruction with respect to the preset function bar affects normal usage of the virtual button, which achieves the effect of avoiding affecting the normal usage of the virtual button by the sliding instruction with respect to the preset function bar.

In the following, apparatus embodiments of the present disclosure will be described, which may be configured to perform method embodiments of the present disclosure. With regard to details not disclosed in the apparatus embodiments, reference can be made to the method embodiments.

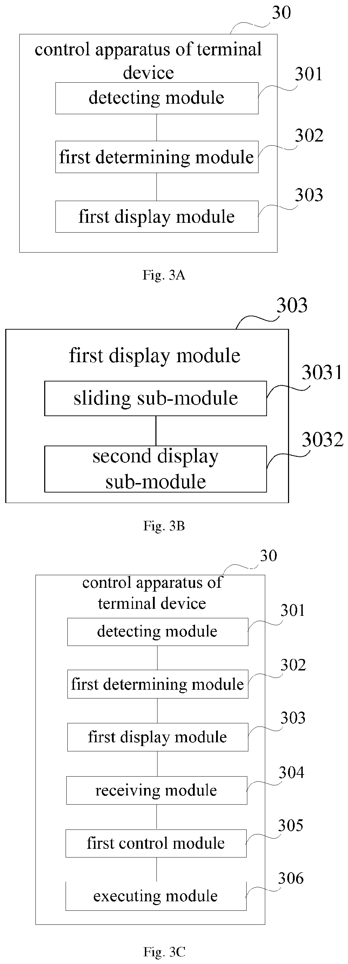

Fig. 3A is a block diagram of a control apparatus 30 of a terminal device according to an embodiment of the present disclosure. As illustrated in Fig. 3A, the control apparatus 30 may include a detecting module 301, a first determining module 302 and a first display module 303.

The detecting module 301 is configured to detect a touch operation on a virtual button bar.

The first determining module 302 is configured to determine whether the touch operation is a target sliding operation when the touch operation on the virtual button bar is detected.

The first display module 303 is configured to display a shortcut function bar on a current display interface of the terminal device when the touch operation is the target sliding operation. The shortcut function bar includes the virtual button bar and a preset function bar. The preset function bar includes at least one identification. The identification is an icon of any application in the terminal device or an entry of any function of the terminal device.

In some embodiments, the target sliding operation is an operation sliding along a target direction. As illustrated in Fig. 3B, the first display module 303 includes a sliding sub-module 3031 and a second display sub-module 3032.

The sliding sub-module 3031 is configured to cause the virtual button bar to slide from a starting position along the target direction in the current display interface of the terminal device when the touch operation is the target sliding operation.

The second display sub-module 3032 is configured to display the preset function bar in the current display interface when the virtual button bar slides to the target position.

In some embodiments, the starting position is at an edge of the current display interface, and a distance between the starting position and the target position is between 1/3 and 2/3 of a length in the target direction of the current display interface.

In some embodiments, the sliding sub-module 3031 is configured to cause the virtual button bar to slide from the starting position along the target direction in the current display interface, and to cause the preset function bar to emerge from the edge of the current display interface with the sliding of the virtual button bar.

In some embodiments, the first display module 303 is configured to: when the touch operation is the target sliding operation, perform fingerprint recognition for the user; when the user passes the fingerprint recognition, display the virtual button bar and a first function bar of the preset function bar in the current display interface of the terminal device; when the user does not pass the fingerprint recognition, display the virtual button bar and a second function bar of the preset function bar in the current display interface of the terminal device.

In some embodiments, as illustrated in Fig. 3C, the control apparatus 30 further includes a receiving module 304, a first control module 305 and an executing module 306.

The receiving module 304 is configured to receive a control instruction for any identification in the preset function bar from the user.

The first control module 305 is configured to control the terminal device to launch the application when the identification is the icon of any application in the terminal device.

The executing module 306 is configured to execute a function corresponding to the entry when the identification is the entry of any function of the terminal device.

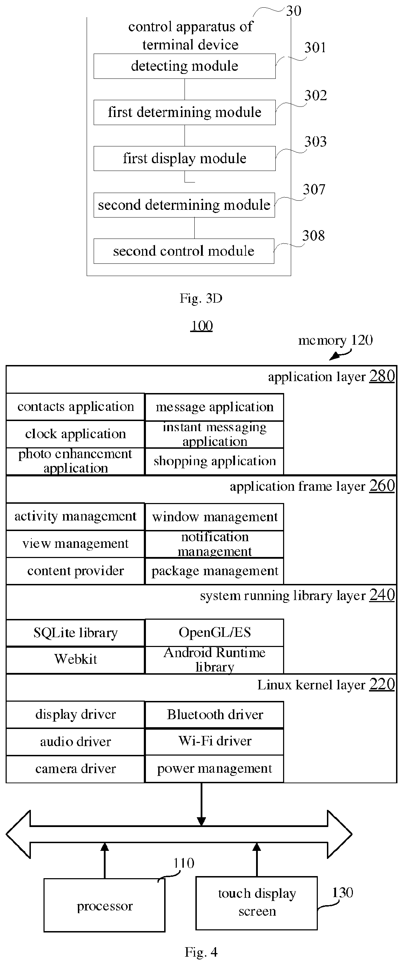

In some embodiments, as illustrated in Fig. 3D, the control apparatus 30 further includes a second determining module 307 and a second control module 308.

The second determining module 307 is configured to determine whether the touch operation is a clicking operation on any virtual button in the virtual button bar when the touch operation on the virtual button bar is detected.

The second control module 308 is configured to control the terminal device according to the function of the virtual button when the touch operation is the clicking operation.

In conclusion, with the control apparatus of the terminal device provided by embodiments of the present disclosure, by enabling the touch instruction with respect to the virtual button bar to have the sliding instruction, and by displaying the shortcut function bar including the preset function bar and the virtual button bar when the touch instruction generated by the touch operation on the virtual button bar is the sliding instruction, it solves the problem in the related art that, the user's finger may touch the virtual button mistakenly when sliding from the edge of the screen towards the inside of the screen, i.e., the sliding instruction with respect to the preset function bar affects normal usage of the virtual button, which achieves the effect of avoiding affecting the normal usage of the virtual button by the sliding instruction with respect to the preset function bar.

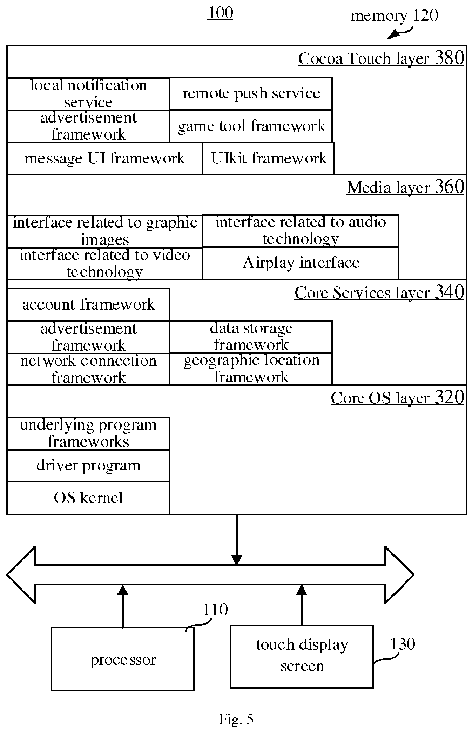

Please refer to Figs. 4 and 5, which are schematic diagrams illustrating a terminal device 100 according to exemplary embodiments of the present disclosure. The terminal device 100 may be a cell phone, a tablet computer, a laptop computer, an e-book, and the like. The terminal device 100 in the present disclosure may include one or more of a processor 110, a memory 120 and a touch display screen 130.

The processor 110 may include one or more processing cores. The processor 110 connects various parts of the entire terminal device 100 by means of various interfaces and wires, executes various functions in the terminal device 100 and processes data by running or executing instructions, programs, sets of codes or sets of instructions stored in the memory 120 and by calling data stored in the memory 120. In some embodiments, the processor 110 may be implemented by hardware in at least one form of DSP (Digital Signal Processing), FPGA (Field-Programmable Gate Array) and PLA (Programmable Logic Array). The processor 110 can integrate one or more of a CPU (Central Processing Unit), a GPU (Graphic Processing Unit) and a modem. The GPU mainly processes the operating system, the user interface and the applications. The GPU is mainly responsible for rendering and drawing content required to be displayed on the touch display screen 130. The modem is configured to process wireless communication. It is to be understood that, the modem may not be integrated into the processor 110, and may be implemented separately by a chip.

The memory 120 may include a RAM (Random Access Memory), and may also include a ROM (Read-Only Memory). In some embodiment, the memory 120 includes a non-transitory computer-readable storage medium. The memory 120 is configured to store instructions, programs, codes, sets of codes or sets of instructions. The memory 120 may include a program storage area and a data storage area. The program storage area may store instructions configured to implement the operating system, instructions for at least one function (such as touch function, audio playing function, and image playing function), instructions configured to implement respective method embodiments, etc. The data storage area may store data (such as audio data and telephone book) created based on usage of the terminal device 100.

Taking the operating system being Android system as an example, the programs and data stored in the memory 120 are as illustrated in Fig. 4. The memory 120 stores a Linux kernel layer 220, a system running library layer 240, an application frame layer 260, and an application layer 280. The Linux kernel layer 220 provides underlying drivers, such as display driver, audio driver, camera driver, Bluetooth driver, Wi-Fi driver, and power management, for various hardware of the terminal device 100. The system running library layer 240 provides main feature support for the Android system through some C/C++ libraries. For example, SQLite library provides support for databases, OpenGL/ES library provides support for 3D drawing, and Webkit library provides support for browser kernel. The system running library layer 240 also provides Android Runtime library, which mainly provides some core libraries, that can allow developers to write Android applications using Java language. The application frame layer 260 provides various APIs that may be used when establishing applications. The developer may use these APIs to establish their own applications, for example, activity management, window management, view management, notification management, content provider, package management, calling management, resource management, and positioning management. At least one applications run in the application layer 280. These applications may be built-in applications of the system such as contacts application, message application, clock application and camera application, and may also be applications developed by third-party developers, such as instant messaging application, and photo enhancement application.

Taking the operating system being IOS system as an example, the programs and data stored in the memory 120 are as illustrated in Fig. 5. The IOS system includes a Core OS layer 320, a Core Services layer 340, a Media layer 360, and a Cocoa Touch layer 380. The Core OS layer 320 includes operating system kernels, drivers and underlying program frameworks, in which these underlying program frameworks provide functions closer to hardware, to be used by grogram frameworks of the Core Services layer 340. The Core Services layer 340 provide system services and/or program frameworks required by applications, for example, foundation framework, account framework, advertisement framework, data storage framework, network connection framework, geographic location framework, and sports framework. The Media layer 360 provide interfaces related to audivision, for example, interface related to graphic images, interface related to audio technology, interface related to video technology, and Airplay interface related to audio and video data transmission technology. The Cocoa touch layer 380 provide various common frameworks related to interfaces for application developing, for example, local notification service, remote push service, advertisement framework, game tool framework, message UI (User Interface) framework, UIkit framework and map framework. The Cocoa touch layer 380 is responsible for touch interaction operation of the user on the terminal device 100.

In the structure illustrated in Fig. 5, frameworks related to most applications include but not limited to, basic frameworks in the Core services layer 340 and the UIkit framework in the Cocoa touch layer 380. The basic frameworks provide many basic object classes and data types, and provide the most basic system services for all the applications, being independent of UI. The class provided by the UIkit framework is the basic UI class library, which is used to establish the touch-based user interface. The iOS applications may provide UI based on the UIKit framework. Therefore, the UIKit framework provide infrastructure of applications, which is configured to establish the user interface, draw, process interaction events and respond to gestures, etc.

The touch display screen 130 is configured to receive touch operations performed by users thereon or nearby with fingers, touch pens or any other suitable objects, and to display user interfaces of respective applications. The touch display screen 130 is generally located in the front panel of the terminal device 100. The touch display screen 130 may be designed as a full screen, a curved screen or a special-shaped screen. The touch display screen 130 may also be designed as a combination of a full screen and a curved screen, a combination of a special-shaped screen and a curved screen, which is not limited in embodiments.

### Full screen

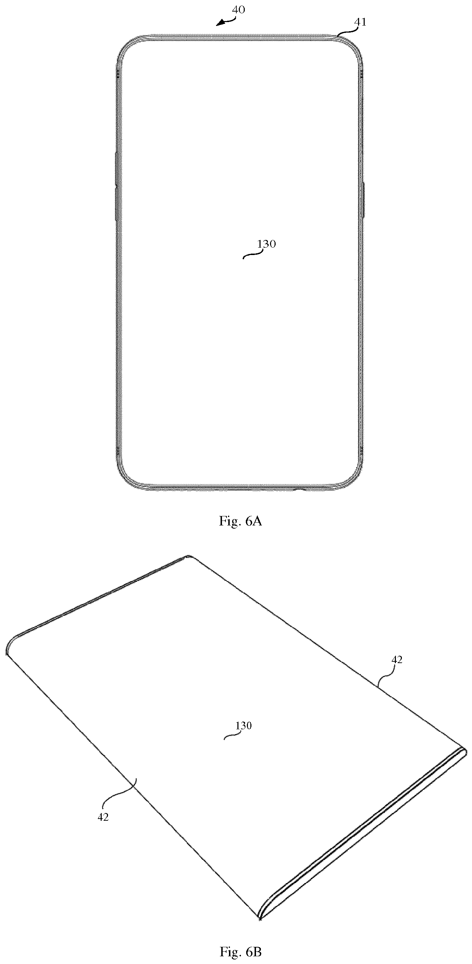

The full screen may be a screen design in which a screen-to-body ratio of the touch display screen 130 to the front panel of the terminal device exceeds a predetermined threshold (for example, 80%, or 90%, or 95%). For example, the screen-to-body ratio may be computed as (the area of the touch display screen 130/the area of the front panel of the terminal device 100)*100%. As another example, the screen-to-body ratio may be computed as (the area of the actual display area of the touch display screen 130/the area of the front panel of the terminal device 100)*100%. As still another example, the screen-to-body ratio may be computed as (the diagonal of the touch display screen 130/the diagonal of the front panel of the terminal device)*100%. For example, as illustrated in Fig. 6A, almost the entire area of the front panel of the terminal device 100 is the touch display screen 130. On the front panel 40 of the terminal device, the area other than the edges generated by the frame 41 is the touch display screen 130. Four angles of the touch display screen 130 may be right angles or round angles.

The full screen may also be a screen design in which at least one front-panel component is integrated inside the touch display screen 130 or under the touch display screen 130. In some embodiments, the at least one front-panel component includes the camera, the fingerprint sensor, the proximity sensor, the distance sensor, and the like. In some embodiments, other components on the front panel of the conventional terminal device are integrated into the entire area or partial area of the touch display screen 130. For example, the photosensitive element in the camera is divided into a plurality of photosensitive pixels, and each photosensitive pixel is integrated into the black area of each display pixel in the touch display screen 130. Since at least one front-panel component is integrated inside the touch display screen 130, the full screen has a higher screen-to-body ratio.

Of course, in some other embodiments of the present disclosure, the front-panel components on the front panel of the conventional terminal device may be disposed on sides or rear side of the terminal device 100. For example, the ultrasonic fingerprint sensor is disposed under the touch display screen 130, the bone conduction loudspeaker is disposed inside the terminal device 100, and the camera is disposed on the side of the terminal device and is a pluggable structure.

In some alternative embodiments, when the terminal device adopts the full screen, the edge touch sensor 120 may be disposed on a single border, or two borders (for example, left and right borders), or four borders (for example, upper, lower, left and right borders) of the frame of the terminal device 100. The edge touch sensor 120 is configured to detect at least one operation of touch operation, clicking operation, pressing operation, and sliding operation on the frame. The edge touch sensor 120 may be any of a touch sensor, a thermal sensor, and a pressure sensor. The user may apply operation on the edge touch sensor 120, to control the application in the terminal device 100.

### Curved screen

The curved screen is a screen design in which the screen area of the touch display screen 130 is not in a plane. In general, the curved screen at least has such a section that it has a curved shape, and the projection of the curved screen along any plane direction perpendicular to the section is planar, in which the curved shape may be U shape. Alternatively, the curved screen is a screen design in which at least one side is curved. Alternatively, the curved screen refers to that, at least one side of the touch display screen 130 extends over the frame of the terminal device 100. Since the side of the touch display screen 130 extends over the frame of the terminal device 100, the frame which originally does not have the display function and the touch function becomes the displayable area and/or operable area, such that the curved screen has a higher screen-to-body ratio. In some embodiments, as illustrated in Fig. 6B, the curved screen is a screen design in which left and right sides 42 are curved. Or, the curved screen is a screen design in which upper and lower sides are curved. Or, the curved screen is a screen design in which each of the upper, lower, left and right sides is curved. In alternative embodiments, the curved screen is made of material with some flexibility.

### Special-shaped screen

The special-shaped screen is a touch display screen which has an irregular shape, in which the irregular shape is not a rectangle or a rounded rectangle. In some embodiments, the special-shaped screen refers to a screen design in which a bump, a notch, and/or a hole is provided on the rectangular or rounded rectangular touch display screen 130. In some embodiments, the bump, the notch and/or the hole may be located on the edge of the touch display screen 130, in the center of the screen, or both. When the bump, the notch and/or the hole is located on one edge, it may be located in the middle of the edge or at two ends of the edge. When the bump, the notch and/or the hole is located in the center of the screen, it may be located in at least one of the upper area, the upper left area, the left area, the lower left area, the lower area, the lower right area, the right area, the upper right area of the screen. When the bumps, the notches and/or the holes are disposed in several areas, they may be concentrated or scattered in these areas, may be distributed symmetrically or asymmetrically. In some embodiments, the number of bumps, notches and/or holes is not limited.

Since the special-shaped screen makes the superior frontal and/or lower frontal area of the touch display screen be the displayable area and/or operable area, the touch display screen occupies more space on the front panel of the terminal device, and thus the special-shaped screen also has a higher screen-to-body ratio. In some embodiments, the notches and/or holes are configured to receive at least one front-panel component, including at least one of the camera, the fingerprint sensor, the proximity sensor, the distance sensor, the loudspeaker, the ambient luminance sensor and the physical button.

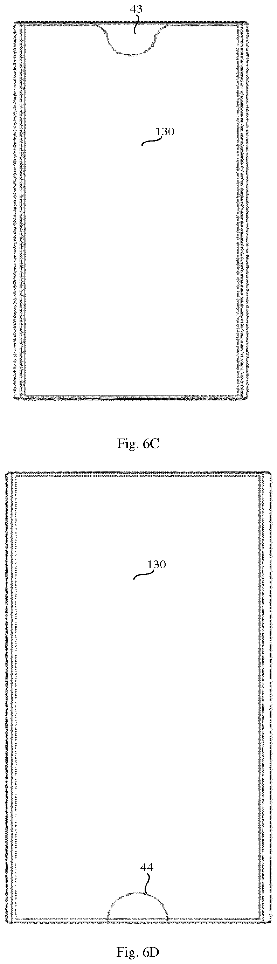

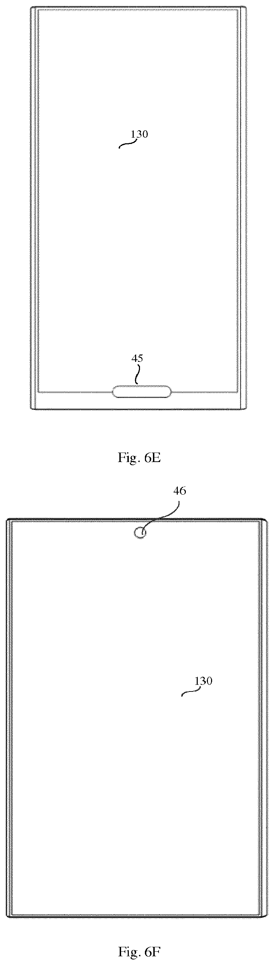

For example, the notch may be provided on one or more edges, and may have a semicircle shape, a rectangular shape, a rounded rectangular shape, or an irregular shape. For example, as illustrated in Fig. 6C, the special-shaped screen may be a screen design in which a semicircle shaped notch 43 is disposed in the middle of the upper edge of the touch display screen 130, and the area vacated by the semicircle shaped notch 43 is configured to receive at least one front-panel component of the camera, the distance sensor (also referred to as the proximity sensor), the loudspeaker, and the ambient luminance sensor. For example, as illustrated in Fig. 6D, the special-shaped screen may be a screen design in which the semicircle shaped notch 44 is disposed in the middle of the lower edge of the touch display screen 130, and the area vacated by the semicircle shaped notch 43 is configured to receive at least one component of the physical button, the fingerprint sensor, and the microphone. For example, as illustrated in Fig. 6E, the special-shaped screen may be a screen design in which a half-elliptic notch 45 is disposed in the middle of the lower edge of the touch display screen 130, another half-elliptic notch is disposed in the front panel of the terminal device 100, the two half-elliptic notches form an elliptic area, and the elliptic area is configured to receive the physical button or the fingerprint recognition module. For example, as illustrated in Fig. 6F, the special-shaped screen may be a screen design in which at least one hole 45 is disposed in the upper area of the touch display screen 130. The area vacated by the hole 45 is configured to receive at least one front-panel component of the camera, the distance sensor, the loudspeaker, and the ambient luminance sensor.

In addition, those skilled in the art would understand that, the structures of the terminal device 100 illustrated in the above drawings do not constitute limitation to the terminal device 100. The terminal device 100 may include more or less components than illustrated, or may combine some components, or may arrange the components in different ways. For example, the terminal device 100 may further include a RF circuit, an input unit, a sensor, an audio circuit, a Wi-Fi module, a power supply, a Bluetooth module, and the like, which will not be elaborated here.

Embodiments of the present disclosure further provide a storage medium. The storage medium is stored with instructions that, when executed by a processor of a terminal device, cause the terminal device to perform the control method of the terminal device provided by above embodiments. For example, the control method may include:
detecting a touch operation on a virtual button bar;
when the touch operation on the virtual button bar is detected, determining whether the touch operation is a target sliding operation; and
when the touch operation is the target sliding operation, displaying a shortcut function bar on a current display interface of the terminal device, the shortcut function bar including the virtual button bar and a preset function bar, the preset function bar displaying at least one identification, the identification being an icon of any application in the terminal device or an entry of any function of the terminal device.

In some embodiments provided by the present disclosure, it is to be understood that the disclosed apparatus may be implemented in other ways. For instance, the apparatus embodiments described above are exemplary, for example, the units are divided in terms of logical functions, and can be divided in other ways in actual implementation. For instance, a plurality of units or components may be combined or may be integrated into another system, or some features may be ignored, or may not be executed. In addition, the displayed or discussed mutual coupling or direct coupling or communication connection may be connected via some interfaces, indirect coupling or communication connection of the devices or units may be in an electrical form or in other forms.

The units described as separate parts may be or may not be physically separated, the components displayed as units may be or may not be physical units, that is, may be located in one place, or may be distributed on a purity of network units. Some or all of the units may be selected according to actual needs to achieve the objective of the solution of this embodiment.

In addition, respective function units in respective embodiments of the present disclosure can be integrated in one processing unit, or respective unit can also exist physically alone, or two or more units may be integrated in one unit. The foregoing integrated unit may be implemented either in hardware or software functional units.

If the integrated unit is implemented as a software functional unit and is sold or used as a stand-alone product, it may be stored in a computer readable storage medium. Based on this understanding, substantial parts or parts that contribute to the related art of the technical solution of the present disclosure or all or parts of the technical solution can be embodied in a form of software product. The computer software product is stored in a storage medium, and includes several instructions to enable a computer device (which may be a personal computer, a server or a network device and the like) to execute all or a part of steps of the methods according to respective embodiments of the present disclosure. The foregoing storage medium includes a U disk, a ROM (Read-Only Memory), a RAM (Random Access Memory), a mobile hard disk, a magnetic disk, an optical disk and other various mediums that may be store program codes.

Those skilled in the art should appreciate that all or part of operations in respective methods of the above embodiments may be implemented by programs instructing related hardware. The programs may be stored in a computer readable memory, and the memory may include a flash disk, a ROM, a RAM, a disk or an optical disk.

## Claims

1. A control method of a terminal device, comprising:
detecting (101, 201) a touch operation on a virtual button bar;
when the touch operation on the virtual button bar is detected, determining (102, 202) whether the touch operation is a target sliding operation; and
when the touch operation is the target sliding operation, displaying (103) a shortcut function bar in a current display interface of the terminal device, the shortcut function bar including the virtual button bar and a preset function bar, the preset function bar displaying at least one identification, the identification being an icon of any application or an entry of any function of the terminal device.

2. The method according to claim 1, wherein the target sliding operation is an operation sliding along a target direction, when the touch operation is the target sliding operation, displaying the (103) shortcut function bar in the current display interface of the terminal device comprises:
when the touch operation is the target sliding operation, causing (203) the virtual button bar to slide from a starting position along the target direction in the current display interface of the terminal device; and
when the virtual button bar reaches a target position, displaying the preset function bar in the current display interface.

3. The method according to claim 2, wherein the starting position is at an edge of the current display interface, and a distance between the starting position and the target position is between 1/3 and 2/3 of a length in the target direction of the current display interface.

4. The method according to claim 2 or 3, wherein causing the virtual button bar to slide from the starting position along the target direction in the current display interface of the terminal device comprises:
causing the virtual button bar to slide from the starting position along the target direction in the current display interface of the terminal device, and causing the preset function bar to emerge from the edge of the current display interface with the sliding of the virtual button bar.

5. The method according to any of claims 1-4, wherein when the touch operation is the target sliding operation, displaying (103) the shortcut function bar in the current display interface of the terminal device comprises:
when the touch operation is the target sliding operation, performing (204) fingerprint recognition for a user;
when the user passes the fingerprint recognition, displaying the virtual button bar and a first function bar of the preset function bar in the current display interface of the terminal device; and
when the user does not pass the fingerprint recognition, displaying the virtual button bar and a second function bar of the present function bar in the current display interface of the terminal device.

6. The method according to any of claims 1-5, wherein the method further comprises:
receiving (206) a control instruction for any identification in the preset function bar;
when the identification corresponding to the control instruction is the icon of any application in the terminal device, controlling (207) the terminal device to launch the application; and
when the identification corresponding to the control instruction is the entry of any function of the terminal device, executing (208) the function corresponding to the entry.

7. The method according to any of claims 1-6, further comprising:
when the touch operation on the virtual button bar is detected, determining whether the touch operation is a clicking operation on any virtual button in the virtual button bar; and
when the touch operation is the clicking operation, controlling (209) the terminal device according to a function corresponding to the virtual button.

8. The method according to claim 7, wherein determining whether the touch operation is the clicking operation on any virtual button in the virtual button bar comprises:
when a duration of a pressing operation in an area including the virtual button exceeds a preset time period, determining that the pressing operation is the clicking operation on the virtual button; or
when a pressure of a pressing operation in an area including the virtual button exceeds a preset pressure, determining that the pressing operation is the clicking operation on the virtual button.

9. A control apparatus (30) of a terminal device, comprising:
a detecting module (301), configured to detect a touch operation on a virtual button bar;
a first determining module (302), configured to determine whether the touch operation is a target sliding operation when the touch operation on the virtual button bar is detected; and
a first display module (303), configured to display a shortcut function bar in a current display interface of the terminal device when the touch operation is the target sliding operation, the shortcut function bar including the virtual button bar and a preset function bar, the preset function bar displaying at least one identification, the identification being an icon of any application or an entry of any function of the terminal device.

10. The apparatus (30) according to claim 9, wherein the target sliding operation is an operation sliding along a target direction, the first display module (303) comprises:
a sliding sub-module (3031), configured to, when the touch operation is the target sliding operation, cause the virtual button bar to slide from a starting position along the target direction in the current display interface of the terminal device; and
a second display sub-module (3032), configured to, when the virtual button bar reaches a target position, display the preset function bar in the current display interface.

11. The apparatus (30) according to claim 10, wherein the starting position is at an edge of the current display interface, and a distance between the starting position and the target position is between 1/3 and 2/3 of a length in the target direction of the current display interface.

12. The apparatus (30) according to claim 10 or 11, wherein the sliding sub-module (3031) is configured to:
cause the virtual button bar to slide from the starting position along the target direction in the current display interface of the terminal device, and cause the preset function bar to emerge from the edge of the current display interface with the sliding of the virtual button bar.

13. The apparatus (30) according to any of claims 9-12, further comprising:
a receiving module (304), configured to receive a control instruction for any identification in the preset function bar;
a first control module (305), configured to, when the identification corresponding to the control instruction is the icon of any application in the terminal device, control the terminal device to launch the application; and
an executing module (306), configured to, when the identification corresponding to the control instruction is the entry of any function of the terminal device, execute the function corresponding to the entry.

14. The apparatus (30) according to any of claims 9-13, further comprising:
a second determining module (307), configured to, when the touch operation on the virtual button bar is detected, determine whether the touch operation is a clicking operation on any virtual button in the virtual button bar; and
a second control module (308), configured to, when the touch operation is the clicking operation, control the terminal device according to a function corresponding to the virtual button.

15. A storage medium, stored with instructions that, when executed by a processor of a terminal device, cause the terminal device to perform a control method of the terminal device according to any of claims 1-8.
